# EUROPÄISCHE PATENTANMELDUNG

(11) **EP 0 953 727 A1**
(43) Veröffentlichungstag der Anmeldung: **03.11.1999**
(21) Anmeldenummer: 99107741.3
(22) Anmeldetag: 19.04.1999
(51) Int. Cl.: E21D 21/00, E21D 20/02, F16B 13/14

(54) **Befestigungselement zum nachträglichen Bewehrungsanschluss, insbesondere für Erdbebensicherung**

(30) Priorität: 27.04.1998 DE 19818739
(71) Anmelder: fischerwerke Artur Fischer GmbH & Co. KG, 72178 Waldachtal (DE)
(72) Erfinder: Grün, Jürgen, 79268 Bötzingen (DE); Schätzle, Joachim Dr., 79341 Kenzingen (DE); Braun, Axel, 79331 Teningen 4 (DE); Weber, Christian Dipl.-Chem., 79312 Emmendingen (DE)

(57) **Zusammenfassung**

Das erfindungsgemäße Befestigungselement besteht aus einem Bewehrungsstab (1), auf dem eine oder mehrere Konushülsen (3) angebracht sind und der Ringspalt (16) mit einer aushärtbaren Masse (12) befüllt ist. Ferner ist der Bewehrungsstab (1) zusätzlich mit einer Kunststoffhülse (13), die im oberen Bereich des Bewehrungsstabes angeordnet ist, versehen. Dadurch wird bei Schockbelastungen die ausgehärtete Mörtelschale (14) durch die Konushülse (3) gegen die Bohrlochwandung gedrückt und die Verankerung aufrechterhalten.

## Beschreibung

Bewehrungsstäbe werden Oft zum Verstärken von Bauwerken mit Hilfe von einer aushärtbaren Masse im Bohrloch gesetzt. Als nachteilig hat sich gezeigt, daß während der Lebensdauer der Befestigung im Beton große Risse, insbesondere bei Schockbelastungen, wie beim Erdbeben entstehen und die Verankerung versagen kann.
Es sind Befestigungselemente bekannt, die im wesentlichen aus einem Gewindebolzen, einer Spreizhülse und einem in die Spreizhülse einziehbaren Spreizkörper mit Spreizkonus bestehen. Die Spreizhülse besitzt Längsschlitze, die beim Einziehen des Spreizkörpers ein Aufspreizen der Spreizhülse ermöglichen. Diese Befestigungselemente sind meist in einem hinterschnittenen Bohrloch gesetzt in dem die gespreizte Hülse einen Formschluß bildet.

In der EP 0 455 952 B1 ist ein Befestigungselement zum Befestigen in einen Untergrund, in dem momentane Schockbelastungen, wie beim Erdbeben entstehen, auftreten, beschrieben. Um das Versagen einer Befestigung bei Schockbelastungen zu vermeiden, ist hier ein Bolzen und eine dazu passende Spreizhülse vorgeschlagen. Die Spreizhülse weist zwei Spreizabschnitte, der erste zylindrische Abschnitt mit einem dem kleinsten Durchmesser des Spreizkonuses und ein zweiter sich konisch erweiternder Abschnitt mit größtem Durchmesser, der in einer zylindrischen Form fortgesetzt wird.
Als nachteilig hat sich bei dem bekannten Befestigungselement gezeigt, daß bei einer Schockbelastung ein großer axialer Schlupf eintritt und das Bauteil sich löst, so daß nach der Beanspruchung ein neues Befestigungselement eingesetzt werden muß.
Ferner ist eine Montage in einem Hinterschnitt durch die Vorbereitung des Hinterschnitts aufwendig und für manche Anwendungsfälle zu teuer.

Ferner ist eine Ankerstange für einen Kunstharzkleber mit einem Schaft bekannt, die über mehrere in axiale Richtung angeordnete Konen verfügt (EP 0 356 425).
Diese bekannte Ankerstange wird im Bohrloch mit Hilfe von einer aushärtbaren Masse gesetzt. Als Ersatz für einen Bewehrungsstab eignet sich diese bekannte Ankerstange nicht, da ein Bewehrungsanschluß nur mit den geeigneten, genormten Bewehrungsstäben zugelassen ist.

Der Erfindung liegt die Aufgabe zugrunde, ein Befestigungselement zum nachträglichen Bewehrungsanschluß, insbesondere für Erdbebensicherung, zu schaffen, das wirtschaftlich hergestellt werden kann und eine unkomplizierte und sichere Verankerung ermöglicht.
Die Lösung dieser Aufgabe wird bei einem Befestigungselement, der eingangs genannten Gattung, durch die im kennzeichnenden Teil des Hauptanspruches angegebenen Merkmale erreicht.
Dadurch, daß der Bewehrungsstab mit einer oder mehreren Konushülsen versehen ist und der Ringspalt zwischen der Bohrlochwandung und dem Bewehrungsstab mit einer aushärtbaren Masse befüllt ist, wird bei der Schockbelastung die ausgehärtete Mörtelschale durch die Konushülse gegen die Bohrlochwandung gedrückt und die Verankerung aufrechterhalten.
Durch die erfindungsgemäße Ausführung des Bewehrungsstabes und seiner Montage mit Hilfe von einer aushärtbaren Masse, ist ein System für einen rißtauglichen Bewehrungsanschluß bereitgestellt, bei dem verschiedene Verankerungstiefen möglich sind.
Um die Gleitfähigkeit der Konushülse in der Mörtelschale zu erleichtern, kann auf der Oberfläche der Segmente ein Trockenfilm angebracht werden.

Bei anhaltenden Schockbelastungen treten Risse im Beton auf.
Um in diesem Fall einen sicheren Bewehrungsanschluß zu gewähren ist vorgesehen, den Bewehrungsstab im oberen Bereich zusätzlich mit einer Kunststoffhülse zu versehen, so daß eine nichthaftende, reibungsarme Fläche entsteht und der Bewehrungsstab nach Bedarf nachrutschen kann und die gebildete Mörtelschale durch die Konushülse gegen die Bohrlochwandung gedrück wird. Diese Ausführungsform ist besonders für Bewehrungsanschlüsse, mit kürzeren Verankerungstiefen geeignet. Statt einer Kunststoffhülse kann der Bewehrungsstab mit einem Beschichtungsmittel versehen werden. Als vorteilhaft haben sich Beschichtungen aus wachsartigem, synthetischem Polymer, Polytetraflourethylen, Siliconpolymer oder galvanisch aufgetragene Überzüge erwiesen. Eine andere Möglichkeit ist die Ummantelung des Bewehrungsstabes mit einer tiefgezogenen, starren Kunststoffhülse anzubringen. Für die Erzielung des niedrigen Reibungswertes sind auch andere Mittel einsetzbar.

Bei lang anhaltenden Schockbelastungen treten neben den Rißbildungen auch Schäden im Beton in der Weise auf, daß Teile des Betons, insbesondere im oberen Bereich, abplatzen. In diesem Fall wird eine längere Verankerungstiefe empfohlen. Durch die segmentartige Ausbildung der Konushülse können Bewehrungsstäbe mit verschiedenem Durchmesser eingesetzt werden.

Die Erfindung wird nachfolgend anhand der Zeichnung näher erläutert.

Es zeigen:
- Figur 1: das erfindungsgemäße Befestigungselement im kompletten Zustand;
- Figur 2: Außenseite eines Konussegmentes nach Figur 1 vor dem Aufbringen auf den Bewehrungsstab;
- Figur 3: Innenseite des Konussegmentes;
- Figur 4: eine abgeschlossene Verankerung mit Hilfe des erfindungsgemäßen Befestigungselementes;
- Figur 5: eine abgeschlossene Verankerung mit Hilfe des erfindinngsgemäßen Befestigungselementes mit einer Kunststoffhülse.

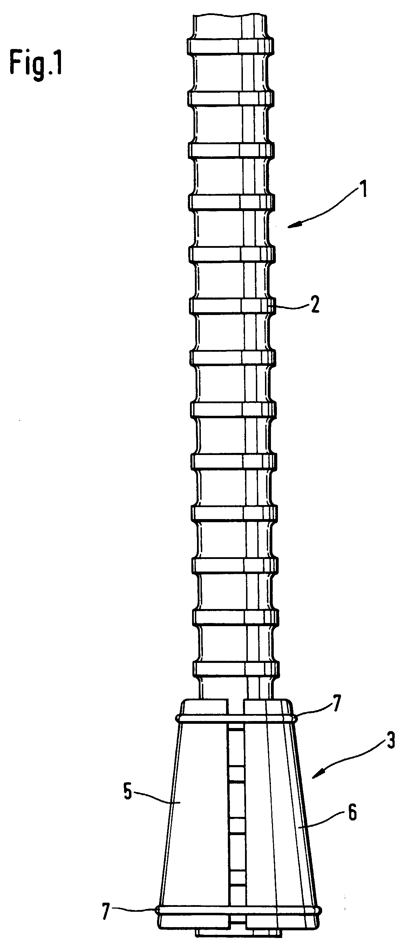

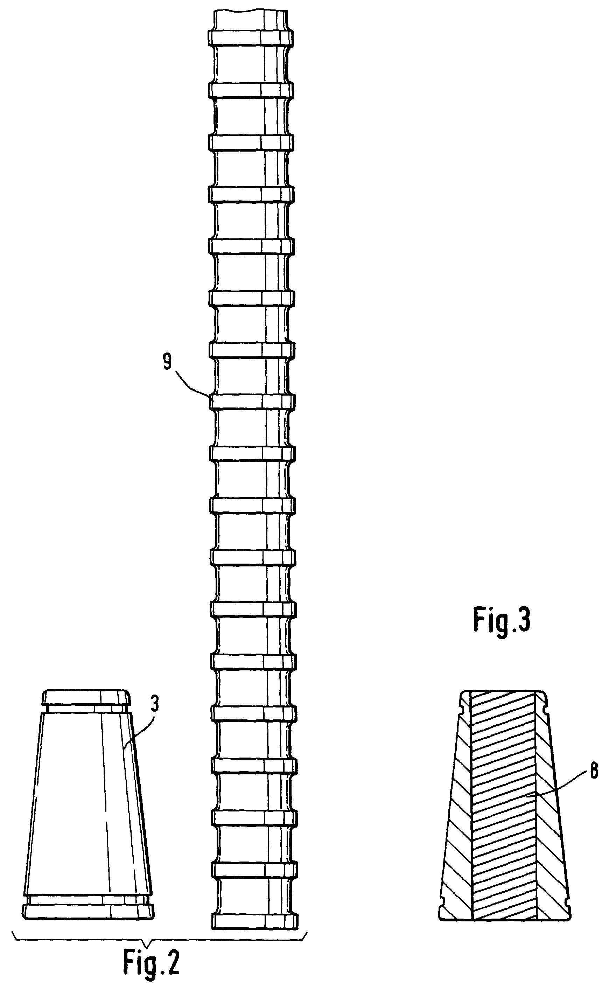

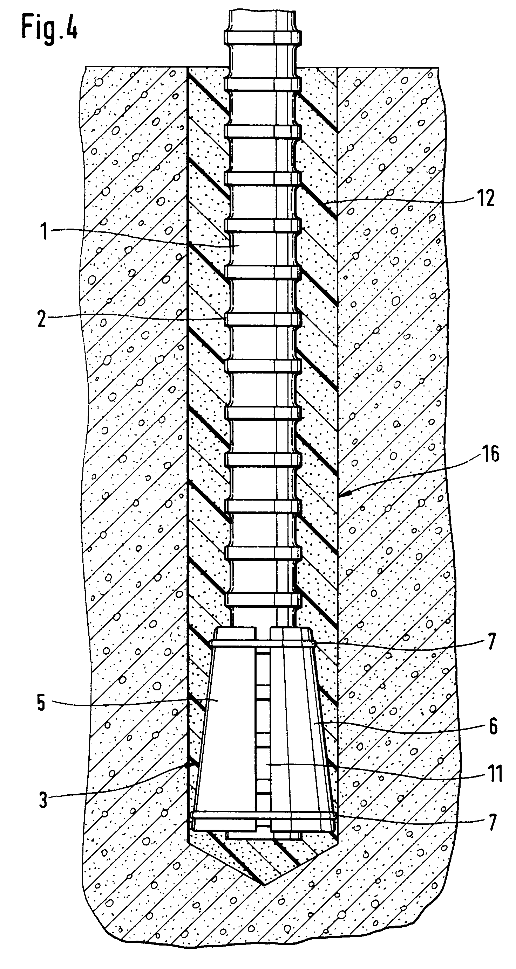

Das in Figur 1 dargestellte, erfindungsgemäße Befestigungselement besteht aus einem Bewehrungsstab 1, mit einer Profilierung 2, auf dem eine Konushülse 3 angebracht ist. Die Konushülse 3 besteht aus zwei oder mehreren Segmenten 5, 6, die im unteren und oberen Bereich mit Hilfe von einem Ring 7 zusammengehalten sind. Auf dem Bewehrungsstab können auch mehrere Konushülsen angebracht werden. Die Positionierung der Konushülsen 3 auf dem Bewehrungsstab 1 erfolgt durch Verkrallen der profilierten Innenseite 8 des Segmentes mit dem Bewehrungsstab 1, wie die Fig. 3 und 4 darstellt. Der nachträgliche Bewehrungsanschluß erfolgt in der Weise, daß nach der Herstellung und Reinigung des Bohrloches eine aushärtbare Masse ins Bohrloch injiziert und der Bewehrungsstab 1 in die Masse hineingesteckt wird. Dabei steigt die Masse in Richtung des Bohrlochmundes, so daß der gesamte Ringspalt 16 mit der Masse 12, wie die Fig. 4 zeigt, befüllt wird.

Beim Auftreten von Rissen drücken die Konushülsen die Mörtelschale gegen die Bohrlochwandung an, so daß ein Nachspreizen des Bewehrungsstabes erfolgen kann und die Verankerung aufrechterhalten ist.

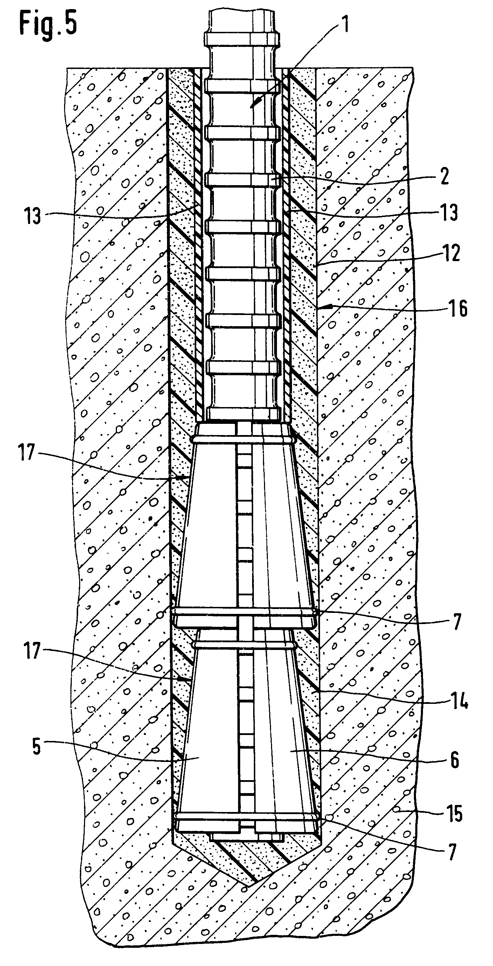

Das in Figur 5 dargestellte Befestigungselement besteht aus einem Bewehrungsstab 1 mit einer Profilierung 2 auf dem zwei Konushülsen 3 angebracht sind. Die Konushülsen 3 bestehen aus Konussegmenten 5, 6, die im unteren und oberen Bereich mit Hilfe von einem Ring 7 zusammengehalten sind. Der Bewehrungsstab ist im oberen Bereich mit einer Kunststoffhülse 13 versehen, die dafür sorgt, daß beim Einmörteln des Bewehrungsstabes 1 in der aushärt baren Masse 12 ein verbundfreier Bereich entsteht. Die Positionierung der Konushülse 3 auf dem Bewehrungsstab 1 erfolgt durch das Verkrallen der profilierten Innenseite 8 des Konussegments mit dem Bewehrungsstab 1. Die Innenprofilierung des Segmentes kann durch Anbringen von Rändeln, Riffeln oder Gewinde erfolgen. Der nachträgliche Bewehrungsanschluß erfolgt in der Weise, daß nach der Herstellung einer Bohrung in einem Untergrund und seiner Reinigung die aushärtbare Masse 12 in das Bohrloch injiziert und der Bewehrungsstab 1 eingesteckt wird. Beim Befüllen des Ringspaltes 16 mit der aushärtbaren Masse 12 entsteht im Bereich, der auf dem Bewehrungsstab angebrachten Kunststoffhülse 13, ein verbundfreier Raum, so daß bei lang anhaltenden Belastungen der Bewehrungsstab nachrutschen kann. Dabei wird die Mörtelschale durch die Konushülsen gegen die Bohrlochwandung gedrückt und die Verankerung aufrechterhalten.
Dank der segmentartigen Ausführungsform der Konushülse 3 können Bewehrungsstäbe mit verschiedenen Durchmessern mit der Konushülse zum Einsatz kommen.

## Patentansprüche

1. Befestigungselement zum nachträglichen Bewehrungsanschluß, das mittels einer aushärtbaren Masse im Bohrloch gesetzt wird, **dadurch gekennzeichnet**, daß der Bewehrungsstab (1) mit einer oder mehreren Konushülsen (3) versehen ist und daß die Konushülsen (3) segmentartig ausgebildet sind.

2. Befestigungselement nach Anspruch 1, **dadurch gekennzeichnet**, daß der Bewehrungsstab (1) im unteren Bereich mit einer oder mehreren Konushülsen (3) und im oberen Bereich mit einer Kunststoffhülse (13) versehen ist und der Ringspalt (16) mit einer aushärtbaren Masse (12) befüllt ist.

3. Befestigungselement nach Anspruch 1, **dadurch gekennzeichnet**, daß die Innenseite der Segmente mit einer Profilierung (2) versehen ist.

4. Befestigungselement nach Anspruch 1, **dadurch gekennzeichnet**, daß eine oder mehrere Konushülsen (3) auf dem Bewehrungsstab (1) durch Verkrallen positioniert sind.

5. Befestigungselement nach Anspruch 1, **dadurch gekennzeichnet**, daß die Konussegmente (5, 6) mit Hilfe von einem Ring (7) zusammengehalten sind.

6. Befestigungselement nach Anspruch 1, **dadurch gekennzeichnet**, daß die Konussegmente (5, 6) mit Hilfe von einem Klebeband zusammengehalten sind.

7. Befestigungselement nach Anspruch 1, **dadurch gekennzeichnet**, daß die Konushülsen (3) im unteren Verankerungsbereich angebracht sind.
